# EUROPEAN PATENT APPLICATION

(11) **EP 1 032 058 A1**
(43) Date of publication of application: **30.08.2000**
(21) Application number: 99301417.4
(22) Date of filing: 25.02.1999
(51) Int. Cl.: H01M 2/10

(54) **Improved battery box**

(71) Applicant: LUCENT TECHNOLOGIES INC., Murray Hill, New Jersey 07974-0636 (US)
(72) Inventor: BESEMER, Leendert Gerrit, EDE 6713 (NL); BLAKBORN Willem, Broek in Waterland 1151 CH (NL); LINGTON, Eric, Loosdrecht, 1231 EH (NL); PRONK, Bartholomeus, VREELAND, 3633 AV., (NL)
(74) Representative: Williams, David John

(57) **Abstract**

A battery box for two electric batteries has on all four walls (12,14,16,18) two springs (22,24 etc), and also has a dividing wall (36); when the batteries are in place, the springs press them against the dividing wall. The box has a pair of spring strips (44,46) hinged at one end to the dividing wall(36), their other ends having a lip (50) which can snap fit into an aperture in opposite walls (14,18). The strips have downward concavities which press against the top of the batteries.

## Description

### Field of the Invention

This invention relates to a battery box, that is, a box for mechanically securing at least one battery.

### Background to the Invention

In some industries, such as the telecommunications industry, electric batteries are used as emergency and stand-by power supplies for telecommunications equipment. In some applications it is a requirement that the batteries are secured in their housing so as to be vibration-proof, and even earthquake proof, and still provide power. It is sometimes a requirement, and always convenient, that a tool is not needed when a battery is replaced; that the securing parts cannot, in normal use, be removed from the box, so they cannot be lost; and that each battery can be replaced separately.

The physical dimensions of batteries may vary by as much as 4 millimetres. In one known arrangement, telecom batteries are secured in battery boxes by the use of loop-and-hook tape such as that sold under the name "Velcro"™, but such a material may not be sufficiently robust and cannot be used in sterile environments.

In another known arrangement, telecom batteries are secured in battery boxes by the use of screw joints, but such joints require the use of a tool, installation may not be easy or rapid, and tolerances may be limited. It is the object of the invention to provide a battery box having securing means which overcomes the disadvantages of known fixing methods.

### Summary of the Invention

According to the invention a battery box for at least one electric battery comprises a floor and four walls, and is characterised by having on the insides of at least two walls spring means which, when at least one battery is in place in the box, bear against at least two sides of the battery.

Preferably the box has springs on all four walls. Preferably the box further comprises spring means, such as spring strips, at its top which, when a battery is in place, bear against the top of the battery.

Preferably the box can accommodate at least two batteries and is further provided with at least one dividing wall, arranged so that, in use, the springs on the outer walls press the batteries against the dividing wall or walls. The invention will now be described by way of example only with reference to the accompanying drawings in which:-

### Brief Description of the Drawings

Figure 1 is a view of a battery box, without batteries; and
Figure 2 is a view of the box of Figure 1 in partially disassembled form.

### Description of Preferred Embodiment

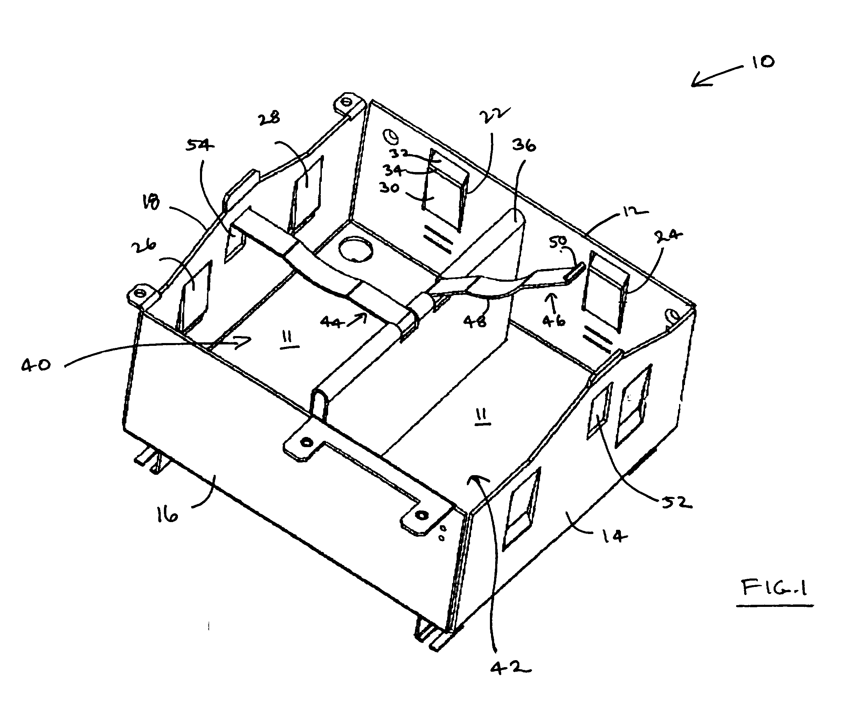

In Figure 1 a metal battery box 10 is of rectangular shape and is suitable for fixing two batteries of standard size. The box has a floor 11 and four walls 12, 14, 16, 18 each carrying two springs, such as springs 22,24 on wall 12 and springs 26,28 on wall 18.

Each spring comprises an area of the metal wall which is deformed inwards between two parallel vertical incisions. The deformed part has a larger rectangular area, such as the lower rectangle 30 on spring 22, and a smaller rectangular area, such as rectangle 32 on spring 22. Between the rectangles is a narrow contact area 34 for contact with a battery.

The springs on wall 16 are mirror images of the springs on wall 12, but the springs on walls 14 and 18 have the larger rectangular areas at the upper ends.

Alternatively the springs may be laminate springs attached to the walls. The box 10 has a dividing wall 36 between walls 12 and 16 which divides the box into two compartments 40,42. On top of the wall 36 towards its centre are two spring strips 44,46 each connected at one end by hinge means to the wall 36. The strips are of such length that their outer ends extend just beyond the walls 14,18. Each strip has a central downward concavity, such as concavity 48 on strip 46, and each strip has on its outer end a lip, such as lip 50 on strip 46, which can snap-fit into an aperture 52,54 in the walls 14,18.

Considering now the insertion of a battery into the compartment 42 of the box 10, first the strip 46 is hinged out of the way, and the battery is pushed down into the compartment so that both the springs on wall 14 and one spring on each of walls 12 and 16 are slightly compressed, and the battery is held firmly against the dividing wall 36. The spring strip 46 is hinged over the top of the battery and its lip 50 is snapped into aperture 52 in wall 14 so that the downward concavity 48 is slightly compressed against the top of the battery and the battery is held firmly against the floor of the box.

Since the dimensions and size variations of standard batteries are known, the dimensions of the battery box 10, the springs 22,24 etc and of the spring strips 44,46 can be selected to apply sufficient pressure to the batteries to hold them in position, and with their electrical connection intact, even when subject to vibration.

It will be apparent that no part of the box needs to be removed to install a battery, and that no tool is needed. In the box illustrated, either of the two batteries can be removed and replaced independently of the other. The open top of the box allows easy access for electrical connection to be made.

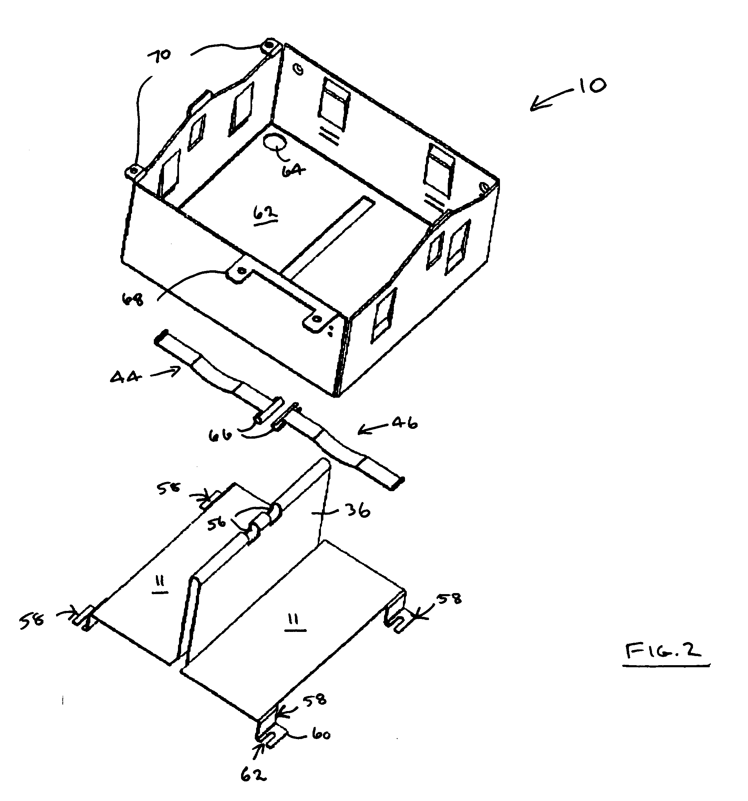

Figure 2 illustrates a convenient construction for the box, especially for the dividing wall 36. A single metal plate is shaped to provide the floor 11 of both compartments 40, 42, and has a narrow "U"-shape upward projection which forms the wall 36. Towards the centre of the upper edge of the wall 36 are two apertures 56. The outer corners of the floor parts 11 each have a downwardly-projecting lug 58, each lug having an outwardly-projecting horizontal foot 60 having a slot 62. The lugs can pass through apertures in the corners of a lower floor 62 of the battery box, such as circular aperture 64. Reference to Figure 1 will show that the feet 60 project below the lower floor and that their slots 62 can be used to fix the box 10 in place.

Referring once more to Figure 2, the spring strips 44,46 are provided at their inner ends with cylindrical parts 66 which can engage the apertures 56 in the top of the wall 36 to form hinges.

The box 10 is provided with additional lugs 68, 70 at the upper edges of its walls for additional or alternative fixing.

While a battery box suitable for two batteries is illustrated above, a battery box according to the invention can hold a single battery, when there will be no dividing wall, or a greater number, when there will be two or more dividing walls.

## Claims

1. A battery box for at least one electric battery ha a floor (11) and four walls (12,14,16,18), characterised by having on the inside of at least two walls spring means (22,24) which, when a battery is in position in the box, bear against at least two sides of the battery.

2. A battery box according to claim 1 in which there is at least one spring means (22,24) on all four walls (12,14,16,18).

3. A battery box according to claim 1 or claim 2 in which the box is of metal and the spring means (22,24) comprise areas of the walls which are deformed inwards.

4. A battery box according to claim 1 or claim 2 in which the spring means are laminated springs (22,24) attached to the walls (12,14,16,18) of the box.

5. A battery box according to any preceding claim further comprising additional spring means (44,46) arranged at the top of the box so that, when a battery is in position in the box, the additional spring means bear against the top of the battery.

6. A battery box according to claim 5 in which the additional spring means comprises at least one spring strip (44,46).

7. A battery box according to any preceding claim having at least one dividing wall (36).

8. A battery box according to claim 7 in which the dividing wall 36 carries one end of the additional spring means (44,46).

9. A battery box according to claim 8 in which the additional spring means is a pair of spring strips (44,46) each hinged at one end to the dividing wall (36) and carrying a lip on its other end which can snap fit into an aperture in one of the box walls (14,18).

10. A battery box according to claim 9 in which the floor (11) of the box and the dividing wall (36) comprise a single metal sheet.
